# EUROPÄISCHE PATENTANMELDUNG

(11) **EP 4 611 125 A1**
(43) Veröffentlichungstag der Anmeldung: **03.09.2025**
(21) Anmeldenummer: 24221885.7
(22) Anmeldetag: 19.12.2024
(51) Int. Cl.: H01M 10/643, H01M 10/6556, H01M 50/213, H01M 50/22, H01M 50/271, H01M 50/548, H01M 50/204, H01M 50/233

(54) **ZELLTRÄGER FÜR MINDESTENS EINE ELEKTRISCHE ZELLE UND EIN ZELLMODUL MIT EINEM ZELLTRÄGER UND EINER MEHRZAHL AN ELEKTRISCHEN ZELLEN**

(30) Priorität: 29.02.2024 EP 24160664
(71) Anmelder: fischer Power Solutions GmbH, 77855 Achern (DE)
(72) Erfinder: FISCHER, Julian, 77876 Kappelrodeck (DE); DÖRFLINGER, Rico, 77876 Kappelrodeck (DE)
(74) Vertreter: Gesthuysen Patentanwälte

(57) **Zusammenfassung**

Dargestellt und beschrieben ist ein Zellträger (2) für mindestens eine Zelle (3). Die mindestens eine Zelle (3) weist ein Zellgehäuse (4) auf. Der Zellträger (2) weist für die mindestens eine Zelle (3) eine Zellaufnahme (11) auf. Der Zellträger (2) ist aus einem Polyurethanschaum hergestellt, der ein Isocyanat und ein Polyol aufweist.

Die Erfindung löst die Aufgabe, eine im Zellträger (2) angeordnete Zelle (3), welche thermisch durchgeht, thermisch und mechanisch ausreichend von ihrer Umgebung zu isolieren, sodass die Umgebung keinen Schaden nimmt.

Die Aufgabe ist dadurch gelöst, dass der Polyurethanschaum ein Gemisch mit dem Isocyanat und einem ersten Teilgemisch ist, dass das erste Teilgemisch ein Gemisch mit dem Polyol und einem zweiten Teilgemisch ist und dass das zweite Teilgemisch ein Ammoniumsulfat aufweist.

## Beschreibung

Die Erfindung betrifft einen Zellträger für mindestens eine elektrische Zelle.

Die mindestens eine Zelle weist ein Zellgehäuse auf und der Zellträger weist für die mindestens eine Zelle eine Zellaufnahme auf. Der Zellträger ist aus einem Polyurethanschaum hergestellt. Der Polyurethanschaum weist ein Isocyanat und ein Polyol auf.

Im Betrieb des Zellträgers ist die Zelle im Zellträger angeordnet. Damit ist gemeint, dass das Zellgehäuse der Zelle in der Zellaufnahme des Zellträgers angeordnet ist. Der Zellträger und das Zellgehäuse sind dann in unmittelbarem Kontakt mit einem Temperiermedium. Ein Temperiermedium ist ein Medium zum Kühlen oder Erwärmen einer Zelle. Es dient also dem Transport von Wärme. Diese Art der Temperierung einer Zelle wird als Immersionstemperierung oder auch als Immersionskühlung bezeichnet. Folglich sind der Zellträger, das Zellgehäuse und das Temperiermedium kompatibel miteinander. Weiter ist das Zellgehäuse dicht für das Temperiermedium.

Aus dem Stand der Technik sind verschiedene Zellträger der beschriebenen Art bekannt, die verschiedene Nachteile haben.

Ein Nachteil ist, dass ein solcher Zellträger eine im Zellträger angeordnete Zelle, welche thermisch durchgeht, thermisch nicht ausreichend von ihrer Umgebung isoliert, sodass die Umgebung Schaden nimmt. Diese Umgebung sind zum Beispiel bei einem Zellträger für mehrere Zellen weitere Zellen in dem Zellträger.

Ein weiterer Nachteil ist, dass ein solcher Zellträger einen nicht ausreichenden Berstschutz für das Zellgehäuse einer Zelle im Zellträger darstellt, wodurch die Umgebung der Zelle ebenfalls nicht ausreichend von der Zelle isoliert ist. Ein Bersten einer Zelle ist häufig eine Konsequenz von einem thermischen Durchgehen der Zelle. Beim Bersten einer Zelle entweichen unter Druck stehende Gase aus dieser.

Eine Aufgabe der vorliegenden Erfindung ist die Angabe eines Zellträgers der beschriebenen Art für Immersionskühlung von mindestens einer Zelle, welcher zumindest einen dieser Nachteil abmildert oder sogar überwindet.

Die Aufgabe ist durch einen Zellträger mit den Merkmalen von Anspruch 1 gelöst. Die Erfindung ist dadurch gekennzeichnet, dass der Polyurethanschaum ein Gemisch mit dem Isocyanat und einem ersten Teilgemisch ist. Dabei ist das erste Teilgemisch ein Gemisch mit dem Polyol und einem zweiten Teilgemisch. Das zweite Teilgemisch weist ein Ammoniumsulfat auf. Das zweite Teilgemisch ist separat vom ersten Teilgemisch hergestellt. Damit ist gemeint, dass zunächst das zweite Teilgemisch mit dem Ammoniumsulfat und gegebenenfalls weiteren Bestandteilen hergestellt wird und dann das erste Teilgemisch mit dem Polyol und dem zweiten Teilgemisch hergestellt wird. Weiter wird dann das Gemisch mit dem Isocyanat und dem ersten Teilgemisch hergestellt.

Der Zellträger hat im Vergleich zum Stand der Technik verschiedene Vorteile. So hat der Polyurethanschaum eine höhere Wärmeabsorptionsfähigkeit. Das ist insbesondere für die Wärme relevant, die bei einem thermischen Durchgehen einer Zelle entsteht. Bei Zellträgern aus dem Stand der Technik wird Wärme durch deren Polyurethanschaum absorbiert. Diese Wärmeabsorption erfolgt insbesondere durch ein Schmelzen des Polyurethanschaums. Hier kommt eine Wärmeabsorption des Ammoniumsulfats hinzu. Diese Wärmeabsorption erfolgt insbesondere durch ein Aufbrechen des Ammoniumsulfats. Die Wärme wird also durch eine Umsetzung absorbiert. Auch hat der Polyurethanschaum eine größere mechanische Stabilität. Diese wirkt einem Bersten einer Zelle entgegen. Denn beim Bersten dehnt sich eine Zelle aus und der Zellträger wirkt diesem Ausdehnen durch seine mechanische Stabilität entgegen. Dadurch ist die Umgebung einer Zelle im Zellträger, welche thermisch durchgeht, kühler und der Zellträger mechanisch stabiler, wenn eine Zelle birst, wodurch die Nachteile im Stand der Technik zumindest abgemildert sind. Der Vergleich bezüglich der Wärmeabsorptionsfähigkeit und der mechanischen Stabilität bezieht sich hier und auch nachfolgend auf einen Zellträger aus dem Stand der Technik mit gleichen Abmessungen.

Der Polyurethanschaum ist in einer ersten Ausgestaltung des Zellträgers ein Hochtemperatur-Polyurethanschaum. Ein Hochtemperatur-Polyurethanschaum zeichnet sich dadurch aus, dass er im Gegensatz zu Nicht-Hochtemperatur-Polyurethanschäumen nicht flüssig wird, sondern bei einer Temperatur oberhalb von 150° C, vorzugsweise oberhalb von 180° C erweicht. Das Erweichen bei hohen Temperaturen im Vergleich zu Nicht-Hochtemperatur-Polyurethanschäumen hat verschiedene Vorteile. Zum einen ist der Zellträger weiterhin an der Stelle, an welcher die Wärme auftritt. Zum anderen weist er länger eine mechanische Stabilität auf, sodass er einem Bersten der Zelle, welche die Wärme erzeugt, entgegenwirkt. Weiter hat er eine erhöhte Wärmeabsorptionsfähigkeit durch ein Verkohlen einer Matrix.

Eine weitere Ausgestaltung sieht vor, dass das zweite Teilgemisch einen Gewichtsanteil zwischen 40 % und 70 %, vorzugsweise zwischen 45 % und 55 % am ersten Teilgemisch hat. Diese Gewichtsanteile haben sich bei Versuchen als besonders wirksam bezüglich einer Erhöhung der Wärmeabsorptionsfähigkeit herausgestellt, ohne die mechanische Stabilität zu beeinträchtigen.

In einer weiteren Ausgestaltung weist das zweite Teilgemisch Körner auf. Und zwar weisen zwischen 7 % und 17 %, vorzugsweise zwischen 10 % und 14 % der Körner eine Größe größer als 125 µm auf und/oder weisen zwischen 19 % und 59 %, vorzugsweise zwischen 29 % und 49 % der Körner eine Größe größer als 63 µm und kleiner oder gleich 125 µm auf und/oder weisen zwischen 29 % und 61 %, vorzugsweise zwischen 37 % und 53 % der Körner eine Größe größer als 40 µm und kleiner oder gleich 63 µm auf. Diese Verteilungen der Größe der Körner haben sich bei Versuchen als besonders wirksam bezüglich einer Erhöhung der Wärmeabsorptionsfähigkeit herausgestellt, wobei zusätzlich durch ein Verzahnen der Körner die mechanische Stabilität erhöht ist. Die Größe ist zum Beispiel ein Durchmesser.

In einer weiteren Ausgestaltung ist eine Dichte des Polyurethanschaums zwischen 0,6 g/ml und 0,9 g/ml, vorzugsweise zwischen 0,7 g/ml und 0,8 g/ml liegt. Diese Dichten sind vorteilhaft, da sie einen guten Kompromiss zwischen der Stabilität, der Wärmeabsorptionsfähigkeit und einem Gewicht des Zellträgers darstellen.

In einer weiteren Ausgestaltung weist der Polyurethanschaum eine Oberflächenschicht und eine Dichte auf. Dabei ist die Dichte in der Oberflächenschicht größer als im übrigen Polyurethanschaum. Auf diese Weise wird die Stabilität des Zellträgers erhöht. Durch die größere Dichte der Oberflächenschicht ist diese auch glatter. Dadurch wir ein Eindringen von Gasen, zum Beispiel von heißen Gasen beim Bersten einer Zelle, erschwert. Gase werden also besser aus dem Zellträger abgeleitet. Auch ist ein Strömungswiderstand des Temperiermediums reduziert. Weiter ist ein Gewicht des Zellträgers geringer, als wenn der Polyurethanschaum insgesamt die größere Dichte aufweisen würde.

In einer Weiterbildung der vorstehenden Ausgestaltung weist die Oberflächenschicht eine Dicke auf und liegt die Dicke zwischen 0,3 mm und 1,5 mm, vorzugsweise zwischen 0,7 mm und 1,1 mm. Diese Dicken der Oberflächenschicht haben sich als ein guter Kompromiss zwischen der Stabilität, dem Erschweren des Eindringens von Gasen und einem Gewicht des Zellträgers herausgestellt.

In einer weiteren Ausgestaltung des Zellträgers weist der Polyurethanschaum Poren auf. Dabei liegt eine Größe der Poren zwischen 10 µm und 200 µm, vorzugsweise zwischen 20 µm und 75 µm. Die Poren erhöhen einen Wärmewiderstand des Polyurethanschaum, da diese mit einem Gas gefüllt sind und Gas ein schlechter Wärmeleiter ist. Mit anderen Worten ist eine Zelle in der Zellaufnahme des Zellträgers in dieser Ausgestaltung thermisch isolierter. Das ist vorteilhaft, wenn die Zelle thermisch durchgeht. Die Zelle erzeugt aber auch im Betrieb Wärme, welche hier durch den Zellträger nur reduziert abgeführt wird. Deshalb ist gerade in dieser Ausgestaltung der unmittelbare Kontakt des Zellgehäuses mit dem Temperiermedium durch den Zellträger wichtig. Die Größe der Poren ist mit dem Wärmewiderstand und der Stabilität des Zellträgers korreliert. Eine Vergrößerung der Poren erhöht den Wärmewiderstand und reduziert die Stabilität. Versuche haben gezeigt, dass diese Größen der Poren einen guten Kompromiss zwischen dem Wärmewiderstand, der Stabilität und auch Kosten darstellen. Große Poren reduzieren die Kosten, da ein Materialbedarf geringer ist. Die Größe ist zum Beispiel ein Durchmesser.

In einer weiteren Ausgestaltung hat das Ammoniumsulfat einen Gewichtsanteil zwischen 64 % und 70 % am zweiten Teilgemisch. Diese Gewichtsanteile haben sich bei Versuchen als besonders wirksam bezüglich einer Erhöhung der Wärmeabsorptionsfähigkeit herausgestellt, ohne die mechanische Stabilität zu beeinträchtigen.

In einer weiteren Ausgestaltung weist das zweite Teilgemisch einen Glimmer auf. Dabei hat der Glimmer einen Gewichtsanteil von mehr als 2 % am zweiten Teilgemisch. Dieser Gewichtsanteil hat sich bei Versuchen als besonders wirksam bezüglich einer Erhöhung des Wärmewiderstands herausgestellt, ohne die mechanische Stabilität zu beeinträchtigen.

In einer weiteren Ausgestaltung weist das zweite Teilgemisch ein Ammoniumphosphat, insbesondere ein Ammoniumdihydrogenorthophosphat auf. Vorzugsweise besteht das zweite Teilgemisch aus dem Ammoniumsulfat, dem Glimmer und dem Ammoniumphosphat. Dieses zweite Teilgemisch hat sich bei Versuchen als besonders wirksam bezüglich einer Erhöhung der Wärmeabsorptionsfähigkeit und des Wärmewiderstands herausgestellt, ohne die mechanische Stabilität zu beeinträchtigen.

Im weiteren Verlauf wird von einem Zellträger ausgegangen, der für die nachfolgend beschriebene Zelle ausgebildet ist. Diese elektrische Zelle weist ein zylinderförmiges Zellgehäuse auf. Das Zellgehäuse weist eine Zelllängsachse, einen Zellmantel, eine erste Zellkappe und eine zweite Zellkappe auf. Der Zellmantel ist konzentrisch um die Zelllängsachse angeordnet. Zylinderförmig meint eine Form eines allgemeinen Zylinders in der Mathematik. Zylinderförmig sind insbesondere Rundzellen und prismatische Zellen. Die erste Zellkappe schließt ein erstes Ende des Zellmantels ab und in der ersten Zellkappe ist ein erster elektrischer Zellkontakt. Die zweite Zellkappe schließt ein zweites Ende des Zellmantels ab und in der zweiten Zellkappe ist ein zweiter elektrischer Zellkontakt. Der erste elektrische Zellkontakt und der zweite elektrische Zellkontakt sind mit einem elektrischen Energiespeicher im Zellgehäuse verbunden, sodass über den ersten elektrischen Zellkontakt und den zweiten elektrischen Zellkontakt dem elektrischen Energiespeicher elektrische Energie zuführbar und entnehmbar ist. Der elektrische Energiespeicher ist für gewöhnlich ein Akkumulator, zum Beispiel auf Basis von Lithium-Verbindungen.

Die Zellaufnahme des Zellträgers weist für die mindestens eine Zelle eine Aufnahmelängsachse auf. Bei in der Zellaufnahme angeordneter Zelle fallen die Aufnahmelängsachse und die Zelllängsachse zusammen.

Aus dem Stand der Technik bekannte Zellträger für diese Zellen haben mindestens einen der folgenden Nachteile:
- Sie sind mechanisch aufwendig und/oder aufwendig in der Herstellung.
- Eine Zelle ist nicht aus dem Zellträger entnehmbar, ohne diesen zu beschädigen.
- Sie schränken eine Temperierung einer Zelle ein.

Zumindest einer der aufgeführten Nachteile wird durch die nachfolgend beschriebene Ausgestaltung des Zellträgers zumindest abgemildert.

Der Zellträger in dieser Ausgestaltung ist in einer Trägerebene senkrecht zur Aufnahmelängsachse in einen ersten Teilträger und einen zweiten Teilträger aufgeteilt. Der erste und zweite Teilträger sind Komponenten des Zellträgers und separat voneinander. Der erste und zweite Teilträger sind auseinanderführbar und zusammenführbar. Beim Auseinanderführen und Zusammenführen werden die Teilträger weder beschädigt noch ist Werkzeug dafür erforderlich.

Die Zellaufnahme ist durch ein Sackloch mit einer Sacklochwandung und einem Sacklochboden zum einen im ersten Teilträger und zum anderen im zweiten Teilträger zusammen gebildet. Damit ist gemeint, dass sowohl der erste Teilträger ein Sackloch mit einer Sacklochwandung und einem Sacklochboden als auch der zweite Teilträger ein Sackloch mit einer Sacklochwandung und einem Sacklochboden aufweist. Das Sackloch im ersten Teilträger und das Sackloch im zweiten Teilträger bilden zusammen die Zellaufnahme.

In jedem der Sacklöcher weist der Sacklochboden eine Sacklochöffnung und die Sacklochwandung mindestens eine Sacklochausnehmung auf. Die Sacklochöffnung des Sacklochbodens eines jeden der Sacklöcher weist eine kleinere Querschnittsfläche als das Sackloch auf, sodass eine Zelle in das Sackloch nur bis zum Sacklochboden hineinschiebbar ist. Die Sacklochausnehmung in der Sacklochwandung eines jeden der Sacklöcher ist zum Beispiel eine Vertiefung in der Sacklochwandung.

Die Zelle ist sowohl in das Sackloch des ersten Teilträgers als auch in das Sackloch des zweiten Teilträgers beschädigungsfrei hineinschiebbar und herausziehbar. Das beschädigungsfreie Hineinschieben und Herausziehen bezieht sich sowohl auf die Zelle als auch auf das Sackloch und ergibt sich unmittelbar aus der Umsetzung der Zellaufnahme durch die Sacklöcher.

Bei zusammengeführtem ersten Teilträger und zweiten Teilträger bilden die Sacklochausnehmung im ersten Teilträger und die Sacklochausnehmung im zweiten Teilträger zusammen einen Sacklochkanal. Der Sacklochkanal verbindet dabei die Sacklochöffnung des ersten Teilträgers und die Sacklochöffnung des zweiten Teilträgers miteinander. Der Sacklochkanal ist also durchgehend.

Bei in das Sackloch des ersten Teilträgers und in das Sackloch des zweiten Teilträgers hineingeschobener Zelle und bei zusammengeführtem ersten und zweiten Teilträger ist ein Temperiermedium durch die Sacklochöffnung des ersten Teilträgers über den Sacklochkanal zur Sacklochöffnung des zweiten Teilträgers strömbar. Das Temperiermedium ist dabei in unmittelbarem Kontakt mit der ersten Zellkappe, dem Zellmantel und der zweiten Zellkappe der Zelle. Der Zellträger setzt also eine Immersionskühlung um und ist mechanisch einfach aufgebaut. Auch ist die Herstellung des Zellträgers einfach.

Das Temperiermedium temperiert somit zum einen die erste und zweite Zellkappe und zum anderen den Zellmantel. Das unmittelbare Temperieren der ersten und zweiten Zellkappe ist vorteilhaft, da in der ersten Zellkappe der erste elektrische Zellkontakt und in der zweiten Zellkappe der zweite elektrische Zellkontakt angeordnet ist und diese aufgrund von elektrischen Widerständen für gewöhnlich eine stärkere Erwärmung aufweisen als der Zellmantel.

Da der Sacklochkanal die Sacklochöffnung im ersten Teilträger und die Sacklochöffnung im zweiten Teilträger miteinander verbindet, weist der Sacklochkanal eine Ausdehnung auch parallel zur Aufnahmelängsachse auf. Demnach bewirkt der Zellträger auch eine Längsströmung eines Temperiermediums im Betrieb des Zellträgers. Ein Temperieren einer Zelle mit einem Temperiermedium, welches durch den Zellträger auch eine Längsströmung aufweist, weist eine höhere Effizienz auf als ein Temperieren dieser Zelle mit einem Zellträger, welcher eine reine Querströmung bewirkt. Bei einer reinen Querströmung strömt ein Temperiermedium nur senkrecht zur Aufnahmelängsachse. Eine höhere Effizienz ergibt sich insbesondere dann, wenn der der Zellträger eine Mehrzahl an Zellaufnahmen aufweist. Denn im Betrieb des Zellträgers wird bei Längsströmung jede einzelne der Zellen mit frischem Temperiermedium temperiert, wohingegen bei Querströmung nur eine erste der Zellen mit frischem Temperiermedium temperiert und die nachfolgenden Zellen mit bereits von der ersten Zelle erwärmtem oder gekühltem Temperiermedium temperiert werden. Auch sind ein Strömungswiderstand und Turbulenzen des Temperiermediums bei Längsströmung geringer als bei Querströmung. Weiter wird bei Längsströmung weniger Temperiermedium benötigt als bei Querströmung.

Die Zellaufnahme ordnet die Zelle an. Das Anordnen der Zelle durch die Zellaufnahme erfolgt durch ein Hineinschieben der Zelle zum einen in das Sackloch im ersten Teilträger und zum anderen in das Sackloch im zweiten Teilträger und durch ein Zusammenführen des ersten und zweiten Teilträgers. In einer Ausgestaltung des Zellträgers erfolgt das Anordnen der Zelle durch die Zellaufnahme durch Formschluss und vorzugsweise durch Kraftschluss. Sowohl bei Formschluss als auch bei Kraftschluss ist der Zellmantel der Zelle in Kontakt mit der Sacklochwandung des Sacklochs im ersten Teilträger und mit der Sacklochwandung des Sacklochs im zweiten Teilträger, sodass die Zelle in der Zellaufnahme senkrecht zur Aufnahmelängsachse spielfrei ist. Weiter ist die erste Zellkappe in Kontakt mit dem Sacklochboden des ersten Teilträgers und ist die zweite Zellkappe in Kontakt mit dem Sacklochboden des zweiten Teilträgers, sodass die Zelle entlang der Aufnahmelängsachse ebenfalls spielfrei ist.

Der Zellträger weist den ersten und zweiten Teilträger auf. In einer Ausgestaltung sind der erste Teilträger und der zweite Teilträger zueinander symmetrisch. Das bedeutet, der erste und zweite Teilträger sind identisch, wodurch die Herstellung des Zellträgers vereinfacht ist.

In einer weiteren Ausgestaltung des Zellträgers weist dieser einen ersten Deckel passend auf den ersten Teilträger und einen zweiten Deckel passend auf den zweiten Teilträger auf. Der erste und zweite Deckel sind weitere Komponenten des Zellträgers. Zum einen der erste Deckel und der erste Teilträger und zum anderen der zweite Deckel und der zweite Teilträger sind auseinanderführbar und zusammenführbar, wie es auch schon der erste Teilträger und der zweite Teilträger sind. Vorzugsweise erfolgt das Auseinanderführen und das Zusammenführen der Komponenten entlang der Aufnahmelängsachse.

Weiter weist der erste Teilträger einen Einströmanschluss und der zweite Teilträger einen Ausströmanschluss für ein Temperiermedium auf. Der erste Deckel weist eine Deckelausnehmung zum Führen des Temperiermediums vom Einströmanschluss zur Sacklochöffnung des Sacklochs im ersten Teilträger und der zweite Deckel weist eine Deckelausnehmung zum Führen des Temperiermediums von der Sacklochöffnung des Sacklochs im zweiten Teilträger zum Ausströmanschluss auf. Folglich ist der Einströmanschluss im ersten Teilträger mit der Deckelausnehmung des ersten Deckels und der Ausströmanschluss im zweiten Teilträger mit der Deckelausnehmung des zweiten Deckels verbunden, sodass ein Temperiermedium strömbar ist. Die Deckelausnehmung im ersten Deckel ist zum Beispiel eine Vertiefung im ersten Deckel, sodass der erste Deckel zusammen mit dem ersten Teilträger einen Deckelkanal bildet. Gleiches gilt zum Beispiel auch für den zweiten Deckel und den zweiten Teilträger.

Im Betrieb des Zellträgers strömt dann ein Temperiermedium durch den Einströmanschluss im ersten Teilträger in den Zellträger hinein, dann durch die Deckelausnehmung im ersten Deckel, die Sacklochöffnung im ersten Teilträger, den Sacklochkanal, die Sacklochöffnung im zweiten Teilträger, die Deckelausnehmung im zweiten Deckel und durch den Ausströmanschluss im zweiten Teilträger aus dem Zellträger hinaus.

In einer weiteren Ausgestaltung des Zellträgers sind der erste Deckel und der zweite Deckel symmetrisch zueinander. Das bedeutet, der erste Deckel und der zweite Deckel sind identisch, wodurch die Herstellung des Zellträgers vereinfacht ist.

Der Zellträger weist die Komponenten erster Teilträger, zweiter Teilträger, erster Deckel und zweiter Deckel auf. Eine weitere Ausgestaltung sieht vor, dass zumindest eine dieser Komponenten einstückig ist. Eine Komponente ist insbesondere dann einstückig, wenn sie nicht aus mehreren Stücken zusammengesetzt ist.

Eine aus dem Polyurethanschaum hergestellte Komponente ist einstückig. Wenn der erste und zweite Teilträger symmetrisch sind, dann ist für deren Herstellung nur eine einzige Form erforderlich. Wenn der erste und zweite Deckel symmetrisch sind, dann ist für deren Herstellung ebenfalls nur eine einzige Form erforderlich. Dadurch ist ein Herstellungsaufwand des Zellträgers vereinfacht. Vertiefungen in den Teilträgern, wie zum Beispiel die Sacklöcher, und/oder in den Deckeln, wie zum Beispiel die Deckelausnehmungen, sind mit Ausformschrägen gut ausformbar, da die Vertiefungen nicht besonders hoch sind.

In einer weiteren Ausgestaltung des Zellträgers weist der Zellträger mindestens zwei Zellaufnahmen auf. Die Zellaufnahmen sind durch den Polyurethanschaum mit einem minimalen Abstand beabstandet. Dieser Abstand liegt zwischen 4 mm und 6 mm, vorzugsweise zwischen 4,2 mm und 5 mm. Dieser Abstandsbereich ist einerseits ausreichend, um ein thermisches Durchgehen und/oder Bersten einer Zelle in einer Zellaufnahme vor dem thermischen Durchgehen und/oder Bersten einer Zelle in einer unmittelbar benachbarten Zellaufnahme zu schützen. Andererseits gewährt der Abstandsbereich eine hohe Dichte an Zellen.

Der Sacklochkanal weist eine Ausdehnung auch parallel zur Aufnahmelängsachse auf. In einer Ausgestaltung des Zellträgers verläuft der Sacklochkanal mäanderförmig oder parallel zur oder spiralförmig um die Aufnahmelängsachse. Wenn der Sacklochkanal parallel zur Aufnahmelängsachse verläuft, dann hat im Betrieb des Zellträgers ein Temperiermedium eine geringere Kontaktfläche mit dem Zellmantel, als wenn der Sacklochkanal spiralförmig um die Aufnahmelängsachse verläuft. Folglich ist ein parallel zur Aufnahmelängsachse verlaufender Sacklochkanal für Zellen geeignet, die einen geringeren Temperierbedarf haben, und ist ein spiralförmig um die Aufnahmelängsachse verlaufender Sacklochkanal für Zellen geeignet, die einen höheren Temperierbedarf haben. Ein große Kontaktfläche wird auch durch einen mäanderförmigen Verlauf des Sacklochkanals erreicht.

Der Zellträger weist mindestens einen Sacklochkanal auf. In einer weiteren Ausgestaltung des Zellträgers ist vorgesehen, dass im ersten Teilträger und im zweiten Teilträger die jeweilige Sacklochwandung eine weitere Sacklochausnehmung aufweist. Die weiteren Sacklochausnehmungen bilden einen weiteren Sacklochkanal. Vorzugsweise ist der weitere Sacklochkanal wie der Sacklochkanal ausgebildet. Der Zellträger kann über den weiteren Sacklochkanal hinaus noch zusätzliche Sacklochkanäle aufweisen. Mit einer steigenden Anzahl an Sacklochkanälen wird eine Temperierleistung der Zelle gesteigert.

In einer weiteren Ausgestaltung des Zellträgers weist dieser eine Mehrzahl von quadratisch oder wabenförmig angeordneten Zellaufnahmen auf.

Die vorstehenden Ausführungen betreffen einen Zellträger. Die nachfolgenden Ausführungen betreffen ein Zellmodul mit einem Zellträger und einer Mehrzahl an elektrischen Zellen.

Jede der Zellen weist ein zylinderförmiges Zellgehäuse mit einer Zelllängsachse, einem Zellmantel, einer ersten Zellkappe und einer zweiten Zellkappe auf. Bei jeder der Zellen schließt die erste Zellkappe ein erstes Ende des Zellmantels ab und ist in der ersten Zellkappe ein erster elektrischer Zellkontakt und schließt die zweite Zellkappe ein zweites Ende des Zellmantels ab und ist in der zweiten Zellkappe ein zweiter elektrischer Zellkontakt.

Der Zellträger weist für jede der Zellen eine Zellaufnahme mit einer Aufnahmelängsachse für eine Aufnahme der jeweiligen Zelle auf. Jede der Zellen ist in einer der Zellaufnahmen angeordnet und die jeweilige Aufnahmelängsachse und die jeweilige Zelllängsachse fallen zusammen.

Die zuvor beschriebenen Nachteile für die Zellträger treffen auch auf das Zellmodul zu. Zumindest einer der aufgeführten Nachteile wird durch die nachfolgend beschriebene Ausgestaltung des Zellmoduls zumindest abgemildert.

Bei dem Zellmodul in dieser Ausgestaltung sind die Aufnahmelängsachsen parallel zueinander und ist der Zellträger in einer Trägerebene senkrecht zu den Aufnahmelängsachsen in einen ersten Teilträger und einen zweiten Teilträger aufgeteilt. Der erste und zweite Teilträger sind auseinanderführbar und zusammenführbar und sind zusammengeführt.

Jede der Zellaufnahmen ist durch ein Sackloch mit einer Sacklochwandung und einem Sacklochboden zum einen im ersten Teilträger und zum anderen im zweiten Teilträger zusammen gebildet. Jeder der Sacklochböden weist eine Sacklochöffnung und jede der Sacklochwandungen mindestens eine Sacklochausnehmung auf.

Jede der Zellen ist in das Sackloch des ersten Teilträgers und in das Sackloch des zweiten Teilträgers einer der Zellaufnahmen beschädigungsfrei hineinschiebbar und herausziehbar und ist hineingeschoben. Das ist insbesondere bei einem Recycling des Zellmoduls vorteilhaft, wenn die Zellen vom Zellträger getrennt werden. Im Stand der Technik sind Zellen und Zellträger oftmals fest miteinander verbunden, wodurch das Recycling aufwendiger ist.

Bei jeder der Zellaufnahmen bilden die Sacklochausnehmung im ersten Teilträger und die Sacklochausnehmung im zweiten Teilträger zusammen einen Sacklochkanal. Der Sacklochkanal verbindet die Sacklochöffnung des ersten Teilträgers und die Sacklochöffnung des zweiten Teilträgers miteinander.

Bei jeder der Zellaufnahmen ist ein Temperiermedium durch die Sacklochöffnung des ersten Teilträgers über den Sacklochkanal zur Sacklochöffnung des zweiten Teilträgers strömbar und ist das Temperiermedium dabei in unmittelbarem Kontakt mit der ersten Zellkappe, dem Zellmantel und der zweiten Zellkappe.

Die Vorteile der zuvor beschriebenen Zellträger treten auch bei dem Zellträger des Zellmoduls auf.

In einer Ausgestaltung des Zellmoduls weist der Zellträger einen ersten Deckel passend auf den ersten Teilträger und einen zweiten Deckel passend auf den zweiten Teilträger auf. Zum einen sind der erste Deckel und der erste Teilträger und zum anderen sind der zweite Deckel und der zweite Teilträger auseinanderführbar und zusammenführbar und sind zusammengeführt.

In einer Ausgestaltung, die auf der Ausgestaltung mit dem ersten und zweiten Deckel aufbaut, weist das Zellmodul ein erstes Kontaktblech und ein zweites Kontaktblech auf. Zum einen ist das erste Kontaktblech zwischen dem ersten Teilträger und dem ersten Deckel und zum anderen ist das zweite Kontaktblech zwischen dem zweiten Teilträger und dem zweiten Deckel angeordnet. Weiter ist eine erste elektrische Zellgruppe gebildet, indem zum einen das erste Kontaktblech die ersten Zellkontakte von zumindest einem Teil der Zellen und zum anderen das zweite Kontaktblech die zweiten Zellkontakte des Teils der Zellen durch die Sacklochöffnungen kontaktiert.

Die Zellen der ersten elektrischen Zellgruppe sind durch das erste und zweite Kontaktblech elektrisch parallel geschaltet. Da die Kontaktierungen zwischen den Kontaktblechen und den Zellkontakten durch die Sacklochöffnungen hindurch erfolgen, sind nicht nur die Kontaktbleche, sondern auch die Kontaktierungen im Betrieb des Zellmoduls in unmittelbarem Kontakt mit einem Temperiermedium, wodurch neben den Kontaktblechen auch die Kontaktierungen temperiert sind. Oftmals weisen diese Kontaktierungen einen höheren elektrischen Widerstand als die Kontaktbleche und die Zellen auf, weshalb sich die Kontaktierungen ohne diese Temperierung stärker erwärmen als die Kontaktbleche und die Zellen.

In einer Ausgestaltung, die auf der Ausgestaltung mit einem ersten und zweiten Kontaktblech aufbaut, weist das Zellmodul ein drittes Kontaktblech, ein viertes Kontaktblech und Kontaktblechverbindungselemente auf. Zum einen ist das dritte Kontaktblech zwischen dem ersten Teilträger und dem ersten Deckel und zum anderen ist das vierte Kontaktblech zwischen dem zweiten Teilträger und dem zweiten Deckel angeordnet. Eine zweite elektrische Zellgruppe ist gebildet, indem zum einen das dritte Kontaktblech die ersten Zellkontakte von zumindest einem verbliebenen Teil der Zellen und zum anderen das vierte Kontaktblech die zweiten Zellkontakte des verbliebenen Teils durch die Sacklochöffnungen kontaktiert. Die Zellen der zweiten elektrischen Zellgruppe sind durch das dritte und vierte Kontaktblech elektrisch parallel geschaltet. Die Kontaktblechverbindungselemente schalten die erste elektrische Zellgruppe und die zweite elektrische Zellgruppe entweder elektrisch parallel oder in Reihe. Vorzugsweise sind die Kontaktbleche einstückig und zum Beispiel aus einem Blech gestanzt. Die Kontaktierung einer Zellkappe erfolgt zum Beispiel durch eine Kontaktfeder. Die Kontaktfeder ist dabei derart ausgebildet, dass sie auf der Zellkappe anliegt. Die Kontaktfeder ist mit der Zellkappe verbunden, vorzugsweise durch eine Laserschweißung.

In einer Ausgestaltung, die auf der Ausgestaltung mit dem ersten und zweiten Kontaktblech aufbaut, weist das Zellmodul eine erste Messplatine, eine zweite Messplatine, eine Steuerungsplatine mit einer Steuerung und eine Verbindungseinrichtung auf. Jede der Messplatinen weist jeweils mindestens einen Temperatursensor zur Messung einer Temperatur eines Temperiermediums und mindestens eine Kontaktvorrichtung auf. Die erste Messplatine ist zwischen dem ersten Teilträger und dem ersten Deckel angeordnet und die Kontaktvorrichtung kontaktiert das erste Kontaktblech. Das Kontaktieren erfolgt entweder mittelbar über ein Kontaktblechverbindungselement oder unmittelbar. Die zweite Messplatine ist zwischen dem zweiten Teilträger und dem zweiten Deckel angeordnet und die Kontaktvorrichtung kontaktiert das zweite Kontaktblech. Das Kontaktieren erfolgt entweder mittelbar über ein Kontaktblechverbindungselement oder unmittelbar.

Die Steuerungsplatine ist am Zellträger angeordnet und sind einerseits die Steuerungsplatine und die erste Messplatine und andererseits die Steuerungsplatine und die zweite Messplatine durch die Verbindungseinrichtung elektrisch miteinander verbunden. Die Steuerung ist zur Messung von Temperaturen mit den Temperatursensoren und zur Messung von Spannungen über die Kontaktvorrichtungen ausgebildet. Bei einer Weiterbildung dieser Ausgestaltung, die auf der Ausgestaltung mit zusätzlich dem dritten und vierten Kontaktblech aufbaut, weisen die Messplatinen zusätzlich Kontaktvorrichtungen für das dritte und vierte Kontaktblech auf und ist die Steuerung zur Messung von Spannungen auch an diesen Kontaktblechen ausgebildet.

In einer Ausgestaltung, die auf der Ausgestaltung mit den vier Kontaktblechen aufbaut, ist zumindest eines der Kontaktblechverbindungselemente ein Shunt. Die Steuerung ist zur Messung einer Spannung über den Shunt und zur Bestimmung eines Stroms durch den Shunt unter Verwendung der Spannung ausgebildet.

In einer weiteren Ausgestaltung ist in einer Stirnseite des Zellträgers eine Stirnseitenausnehmung zur Aufnahme der Steuerungsplatine und zur Durchströmung mit einem Temperiermedium ausgebildet und ist die Steuerungsplatine in der Stirnseitenausnehmung angeordnet. Folglich ist die Steuerungsplatine in unmittelbarem Kontakt mit einem Temperiermedium und wird durch dieses temperiert. Dabei ist das Temperiermedium um die Steuerungsplatine entweder stationär oder vorzugsweise strömend.

In einer weiteren Ausgestaltung ist die Steuerung zum Balancing von Zellgruppen ausgebildet und weist Widerstände zum Entladen von Zellgruppen auf. Die Widerstände sind für einen unmittelbaren Kontakt mit einem Temperiermedium ausgebildet. Das Balancing von Zellgruppen erfolgt also durch das Entladen von Zellgruppen über die Widerstände.

In weiteren Ausgestaltungen ist der Zellträger des Zellmoduls ausgebildet wie die zuvor beschriebenen Zellträger. Im Übrigen gelten die Ausführungen für die Zellträger entsprechend für den Zellträger des Zellmoduls und gelten die Ausführungen für den Zellträger des Zellmoduls entsprechend für die Zellträger.

Im Einzelnen ist eine Vielzahl von Möglichkeiten gegeben, den Zellträger und das Zellmodul auszugestalten und weiterzubilden. Dazu wird verwiesen sowohl auf die den unabhängigen Ansprüchen nachgeordneten Ansprüche als auch auf die nachfolgende Beschreibung eines bevorzugten Ausführungsbeispiels in Verbindung mit der Zeichnung. In der Zeichnung zeigt
- Figur 1a: ein Ausführungsbeispiel eines Zellmoduls und eines Zellträgers,
- Figur 1b: das Zellmodul und den Zellträger auseinandergeführt,
- Figur 1c: einen Schnitt eines Ausschnitts des Zellmoduls,
- Figur 2a: eine Zelle des Zellmoduls in einer ersten Ansicht,
- Figur 2b: die Zelle in einer zweiten Ansicht,
- Figur 3a: einen ersten Teilträger des Zellträgers mit einer Zelle,
- Figur 3b: einen Ausschnitt des ersten Teilträgers mit der Zelle,
- Figur 3c: einen weiteren Ausschnitt des ersten Teilträgers mit der Zelle
- Figur 3d: einen ersten Schnitt des Ausschnitts aus Figur 3b,
- Figur 3e: einen zweiten Schnitt des Ausschnitts,
- Figur 4: einen ersten Deckel des Zellträgers,
- Figur 5a: wesentliche elektrische Elemente des Zellmoduls,
- Figur 5b: Teile der wesentlichen elektrischen Elemente,
- Figur 5c: Teile der wesentlichen elektrischen Elemente und
- Figur 5d: Teile der wesentlichen elektrischen Elemente.

Die Figuren zeigen ein Ausführungsbeispiel eines Zellmoduls 1 und ein Ausführungsbeispiel eines Zellträgers 2. Das Zellmodul 1 weist den Zellträger 2 und eine Mehrzahl an elektrischen Zellen 3 auf.

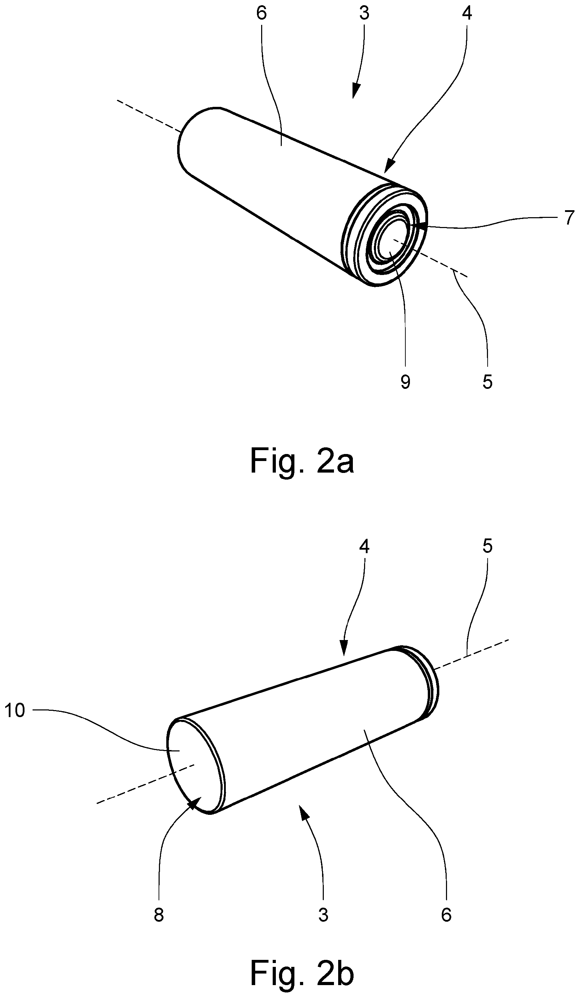

Eine der Zellen 3 ist in Figur 2a in einer ersten Ansicht und in Figur 2b in einer zweiten Ansicht dargestellt. Die Zelle 3 weist ein zylinderförmiges Zellgehäuse 4 auf. Das Zellgehäuse 4 weist eine Zelllängsachse 5, einen Zellmantel 6, eine erste Zellkappe 7 und eine zweite Zellkappe 8 auf. Die erste Zellkappe 7 schließt ein erstes Ende des Zellmantels 6 ab und in der ersten Zellkappe 7 ist ein erster elektrischer Zellkontakt 9. Die zweite Zellkappe 8 schließt ein zweites Ende des Zellmantels 6 ab und in der zweiten Zellkappe 8 ist ein zweiter elektrischer Zellkontakt 10. In diesem Ausführungsbeispiel ist die Zelle 3 eine Rundzelle. Der Zellmantel 6 hat also eine kreisrunde Querschnittskontur in einer Ebene senkrecht zur Zelllängsachse 5 konzentrisch um die Zelllängsachse 5. Die Zellen 3 sind gleich ausgebildet.

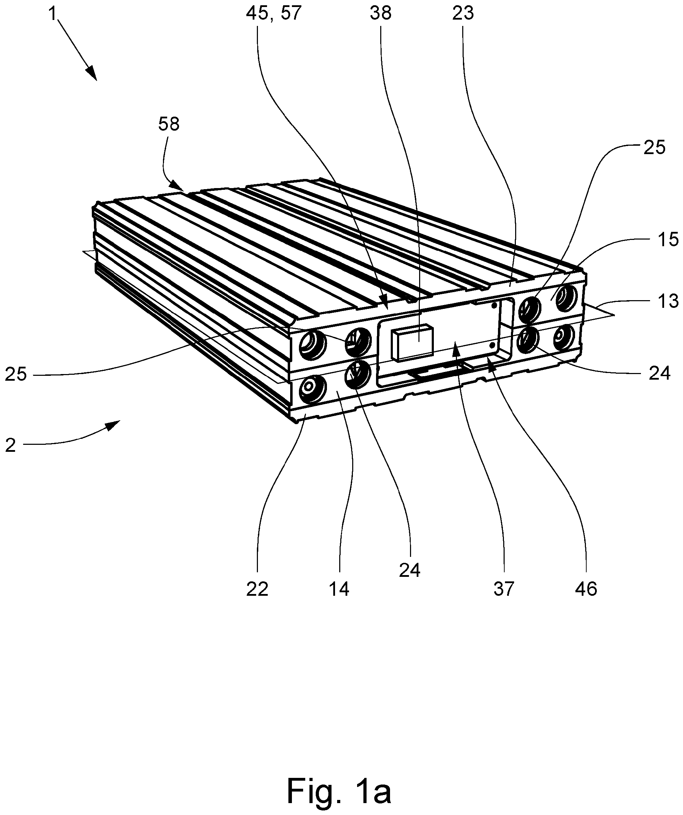

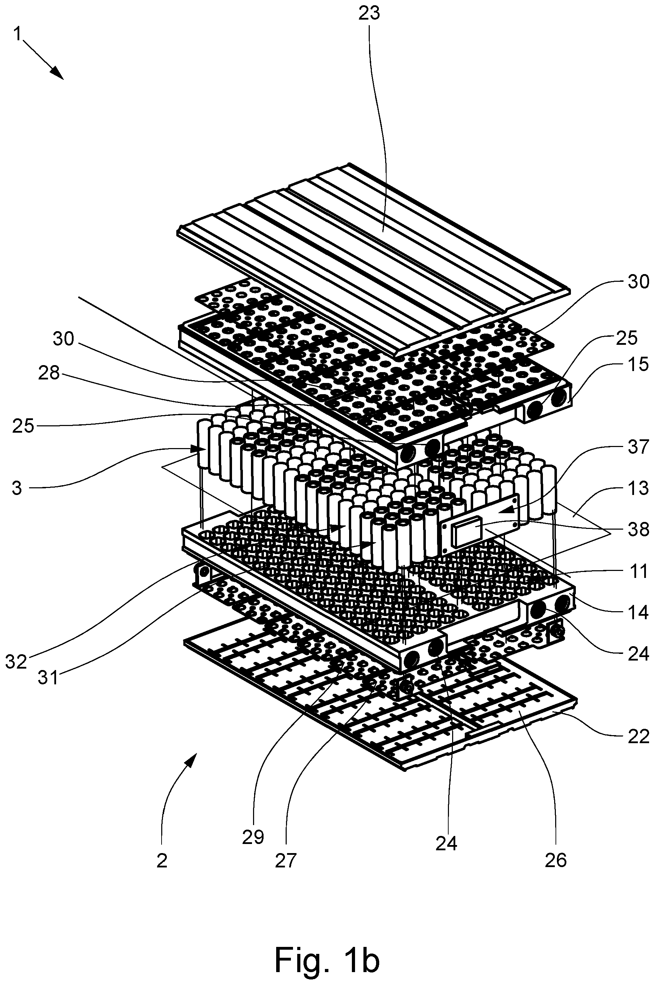

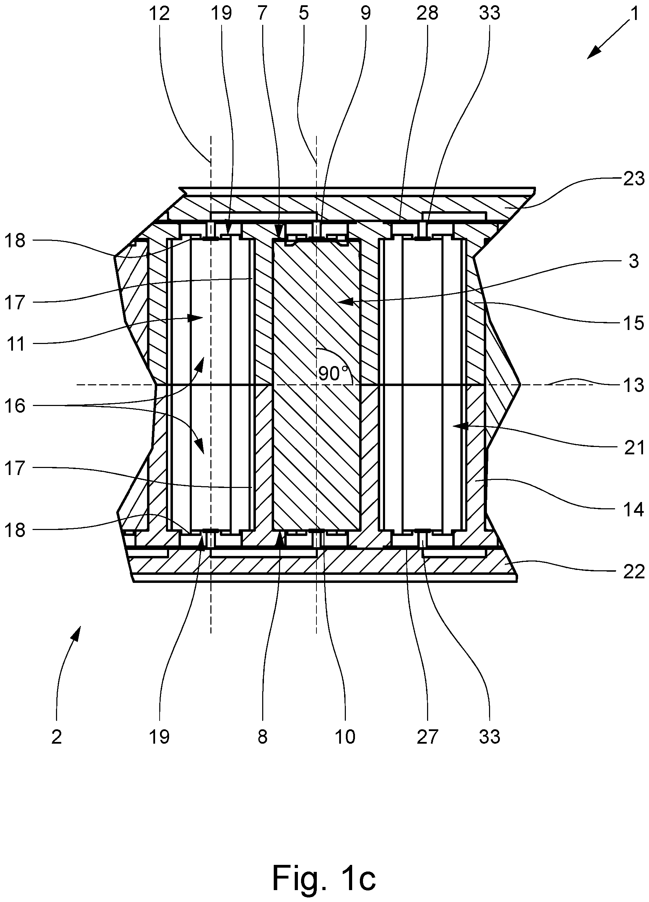

Das Zellmodul 1 und der Zellträger 2 sind in Figur 1a zusammengeführt und in Figur 1b auseinandergeführt dargestellt. Figur 1c zeigt einen Querschnitt eines Ausschnitts des Zellmoduls 1 und des Zellträgers 2.

Der Zellträger 2 ist für die Mehrzahl der Zellen 3 ausgebildet. Dazu weist der Zellträger 2 für die Mehrzahl der Zellen 3 eine entsprechende Mehrzahl an Zellaufnahmen 11 auf, die quadratisch angeordnet sind. Jede der Zellaufnahmen 11 weist eine Aufnahmelängsachse 12 für eine Aufnahme einer der Zellen 3 auf. Wenn in einer der Zellaufnahmen 11 eine der Zellen 3 angeordnet ist, dann fallen die Aufnahmelängsachse 12 und die Zelllängsachse 5 zusammen.

Der Zellträger 2 ist in einer Trägerebene 13 senkrecht zur Aufnahmelängsachse 12 in einen ersten Teilträger 14 und einen zweiten Teilträger 15 aufgeteilt. Der erste Teilträger 14 und der zweite Teilträger 15 sind Komponenten des Zellträgers 2. Der erste Teilträger 14 und der zweite Teilträger 15 sind auseinanderführbar, siehe Figur 1b, und zusammenführbar, siehe Figur 1a, und zwar entlang der Aufnahmelängsachse 12.

Im Folgenden wird nur eine der Mehrzahl an Zellaufnahmen 11 im Zellträger 2 beschrieben, da die Zellaufnahmen 11 gleich ausgebildet sind.

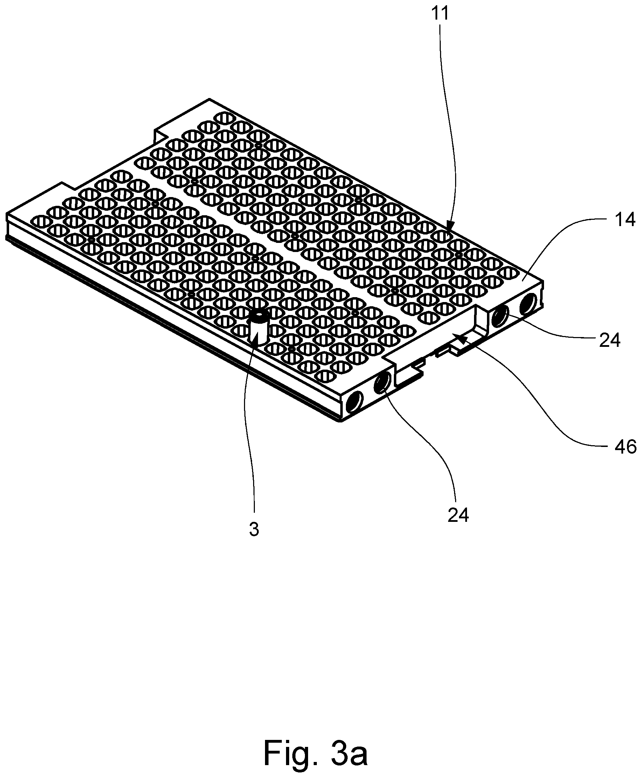

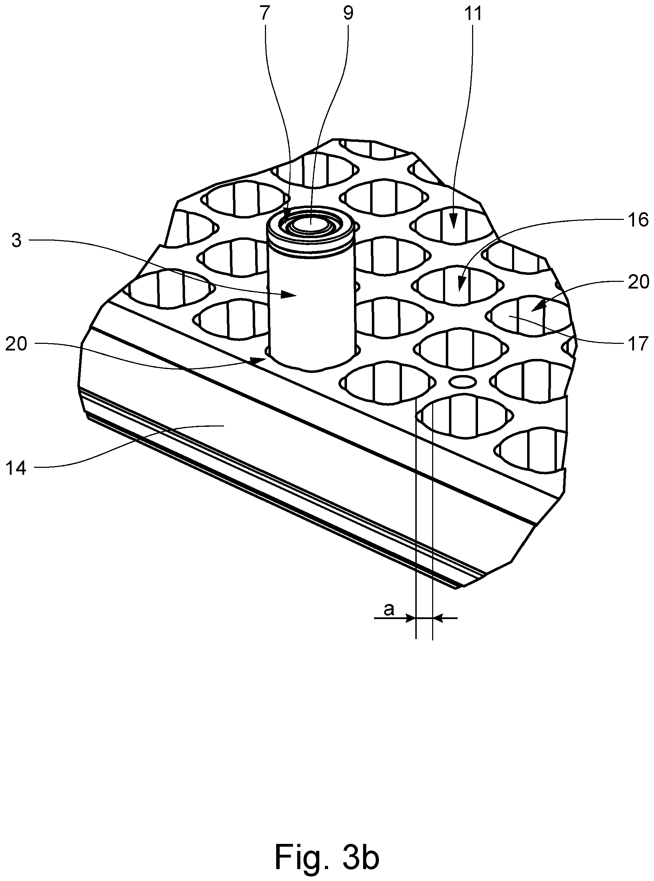

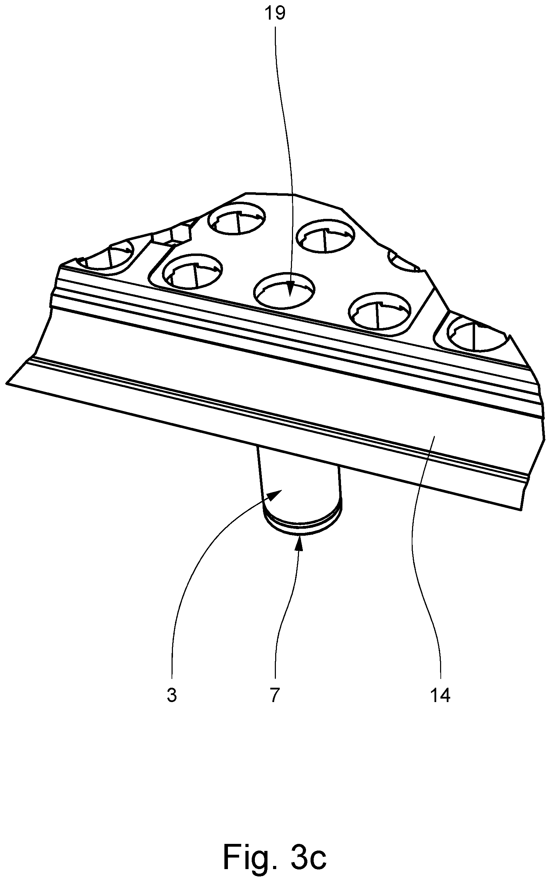

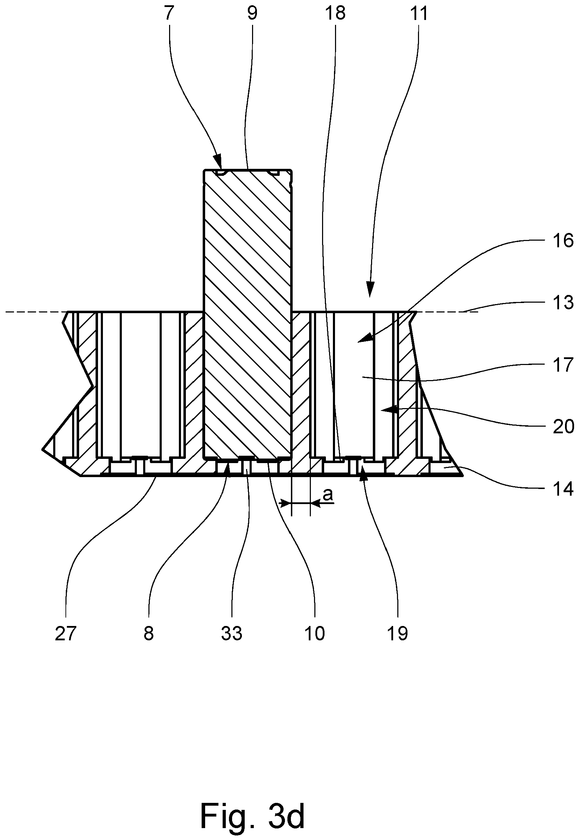

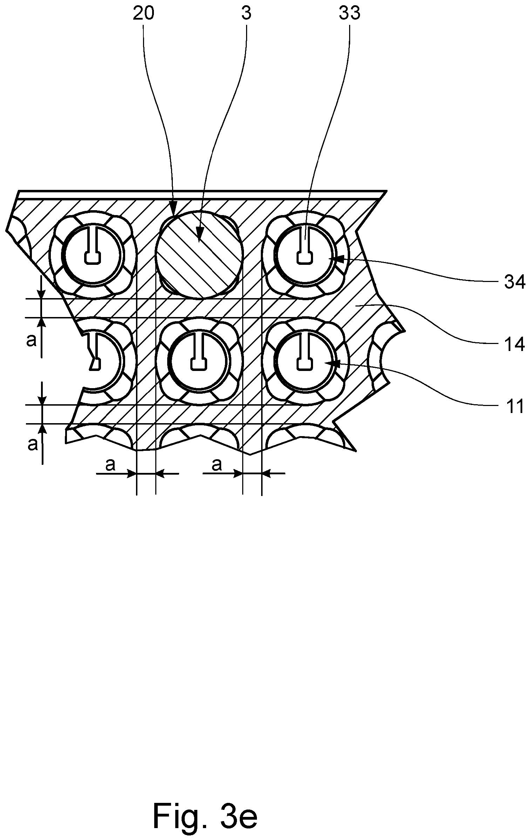

Der erste Teilträger 14 mit einer der Zellen 3, die in eine der Zellaufnahmen 11 hineingeschoben ist, ist in Figur 3a dargestellt. Der erste Teilträger 14 und der zweite Teilträger 15 sind symmetrisch zueinander und in diesem Ausführungsbeispiel auch identisch. Figur 3b zeigt einen Ausschnitt des ersten Teilträgers 14 mit der Zelle 3, Figur 3d einen Längsschnitt und Figur 3e einen Querschnitt des Ausschnitts. Figur 3c zeigt einen weiteren Ausschnitt des ersten Teilträgers 14 mit der Zelle 3.

Die Zellaufnahme 11 ist durch ein Sackloch 16 mit einer Sacklochwandung 17 und einem Sacklochboden 18 zum einen im ersten Teilträger 14 und zum anderen im zweiten Teilträger 15 zusammen gebildet. Jeder der beiden Sacklochböden 18 weist eine Sacklochöffnung 19 und jede der beiden Sacklochwandungen 17 vier Sacklochausnehmungen 20 auf. Jede der Sacklochausnehmungen 20 ist eine Vertiefung in der jeweiligen Sacklochwandung 17. Demnach weisen der erste Teilträger 14 und der zweite Teilträger 15 jeweils ein Sackloch 16 mit einer Sacklochwandung 17 mit vier Sacklochausnehmungen 20 und einem Sacklochboden 18 mit einer Sacklochöffnung 19 auf. Die Sacklochausnehmungen 20 verlaufen parallel zur Aufnahmelängsachse 12.

Die Zelle 3 ist in das Sackloch 16 des ersten Teilträgers 14 und in das Sackloch 16 des zweiten Teilträgers 15 beschädigungsfrei hineinschiebbar und herausziehbar.

Bei zusammengeführtem ersten Teilträger 14 und zweiten Teilträger 15 ordnen der erste Teilträger 14 und der zweite Teilträger 15 die Zelle 3 durch Kraftschluss an und bilden die vier Sacklochausnehmungen 20 im ersten Teilträger 14 und die vier Sacklochausnehmungen 20 im zweiten Teilträger 15 zusammen vier Sacklochkanäle 21. Die vier Sacklochkanäle 21 verbinden die Sacklochöffnung 19 des ersten Teilträgers 14 und die Sacklochöffnung 19 des zweiten Teilträgers 15 miteinander.

Bei in das Sackloch 16 des ersten Teilträgers 14 und in das Sackloch 16 des zweiten Teilträgers 15 hineingeschobener Zelle 3 und bei zusammengeführtem ersten Teilträger 14 und zweiten Teilträger 15 ist ein Temperiermedium durch die Sacklochöffnung 19 des ersten Teilträgers 14 über die vier Sacklochkanäle 21 zur Sacklochöffnung 19 des zweiten Trägers 15 strömbar. Das Temperiermedium ist dabei in unmittelbarem Kontakt mit der ersten Zellkappe 7, dem Zellmantel 6 und der zweiten Zellkappe 8.

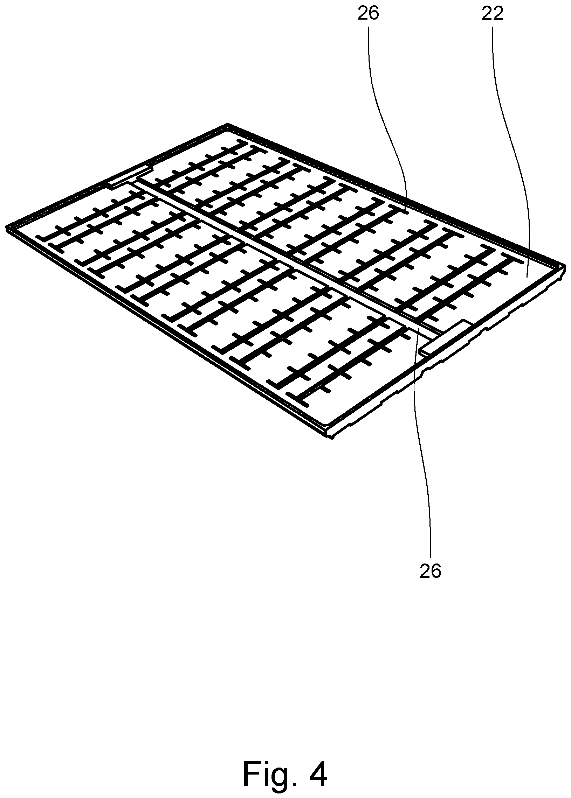

Der Zellträger 2 weist neben dem ersten Teilträger 14 und dem zweiten Teilträger 15 auch einen ersten Deckel 22 passend auf den ersten Teilträger 14 und einen zweiten Deckel 23 passend auf den zweiten Teilträger 15 auf. Figur 4 zeigt den ersten Deckel 22. Der erste Deckel 22 und der zweite Deckel 23 sind weitere Komponenten des Zellträgers 2 und symmetrisch zueinander und in diesem Ausführungsbeispiel identisch. Zum einen der erste Deckel 22 und der erste Teilträger 14 und zum anderen der zweite Deckel 23 und der zweite Teilträger 15 sind auseinanderführbar und zusammenführbar, und zwar entlang der Aufnahmelängsachse 12. Der erste Teilträger 14 weist zwei Einströmanschlüsse 24 und der zweite Teilträger 15 zwei Ausströmanschlüsse 25 für ein Temperiermedium auf. Die Einströmanschlüsse 24 und die Ausströmanschlüsse 25 sind alle identisch ausgebildet. Der erste Deckel 22 weist eine Deckelausnehmung 26 zum Führen des Temperiermediums von den Einströmanschlüssen 24 zur Sacklochöffnung 19 des Sacklochs 16 im ersten Teilträger 14 und der zweite Deckel 23 weist eine Deckelausnehmung 26 zum Führen des Temperiermediums von der Sacklochöffnung 19 des Sacklochs 16 im zweiten Teilträger 15 zu den Ausströmanschlüssen 25 auf. Jede der Deckelausnehmungen 26 ist eine Vertiefung im jeweiligen Deckel 22, 23. Jede der Deckelausnehmungen 26 ist verzweigt, sodass durch jede der Sacklochöffnungen 19 ein Temperiermedium strömt. Die Deckelausnehmungen 26 in den Deckeln 22, 23 sind identisch ausgebildet.

Die Komponenten, das sind in diesem Ausführungsbeispiel der erste Teilträger 14, der zweite Teilträger 15, der erste Deckel 22 und der zweite Deckel 23, sind jeweils einstückig und aus einem Polyurethanschaum hergestellt.

Der Polyurethanschaum ist ein Hochtemperatur-Polyurethanschaum und ein Gemisch mit einem Isocyanat und einem ersten Teilgemisch. Das erste Teilgemisch ist ein Gemisch mit einem Polyol und einem zweiten Teilgemisch. Das zweite Teilgemisch weist ein Ammoniumsulfat, einen Glimmer und ein Ammoniumdihydrogenorthophosphat auf. Das Ammoniumsulfat hat einen Gewichtsanteil von 67 % und der Glimmer von 3 % am zweiten Teilgemisch. Der Rest des zweiten Teilgemischs ist das Ammoniumdihydrogenorthophosphat. Das zweite Teilgemisch hat einen Gewichtsanteil von 50 % am ersten Teilgemisch.

Das zweite Teilgemisch weist Körner auf. 12 % der Körner weisen eine Größe größer als 125 µm auf. 39 % der Körner weisen eine Größe größer als 63 µm und kleiner oder gleich 125 µm auf. 45 % der Körner weisen eine Größe größer als 40 µm und kleiner oder gleich 63 µm auf.

Der Polyurethanschaum einer jeden der Komponenten weist eine Oberflächenschicht und eine Dichte auf. Die Oberflächenschicht weist eine Dicke von 0,9 mm auf. Die Dichte ist in der Oberflächenschicht größer als im übrigen Polyurethanschaum. Der Polyurethanschaum weist Poren auf. Eine Größe der Poren liegt zwischen 20 µm und 75 µm.

Die vorstehenden Zahlenwerte des Polyurethanschaums sind im Rahmen der technisch möglichen Umsetzung als genau zu verstehen.

Zwei unmittelbar benachbarte Zellaufnahmen 11 haben durch den Polyurethanschaum des Zellträgers 2 einen minimalen Abstand von a = 4,5 mm, siehe insbesondere Figur 3e.

Das Zellmodul 1 weist den Zellträger 2 und die Mehrzahl an den Zellen 3 auf. In diesem Ausführungsbeispiel sind es 216 der Zellen 3. Dementsprechend weist der Zellträger 2 216 der Zellaufnahmen 11 auf. Jede der Zellen 3 ist in einer der Zellaufnahmen 11 angeordnet und es fallen die jeweilige Aufnahmelängsachse 12 und die jeweilige Zelllängsachse 5 zusammen. Die Aufnahmelängsachsen 12 sind parallel zueinander.

Der erste Teilträger 14 und der zweite Teilträger 15 sind zusammengeführt. Jede der Zellen 3 ist in das Sackloch 16 des ersten Teilträgers 14 und in das Sackloch 16 des zweiten Teilträgers 15 einer der Zellaufnahmen 11 hineingeschoben.

Zum einen der erste Deckel 22 und der erste Teilträger 14 und zum anderen der zweite Deckel 23 und der zweite Teilträger 15 sind zusammengeführt.

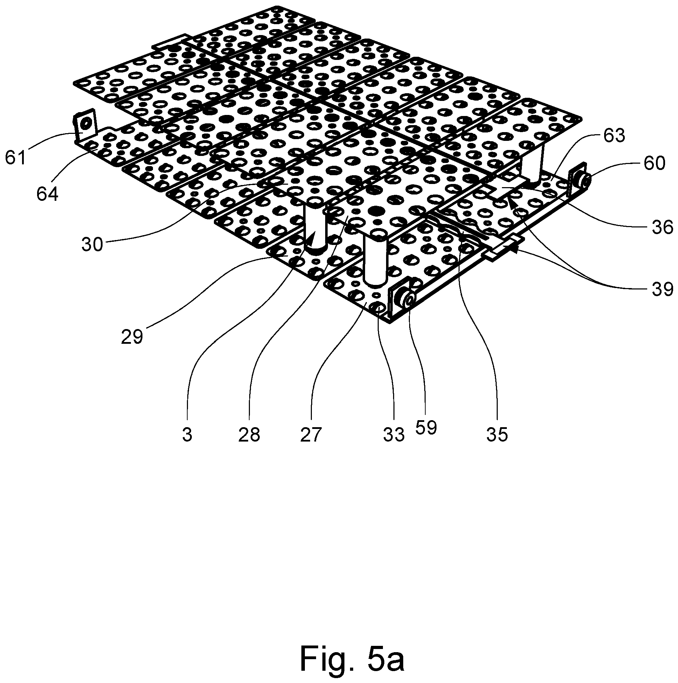

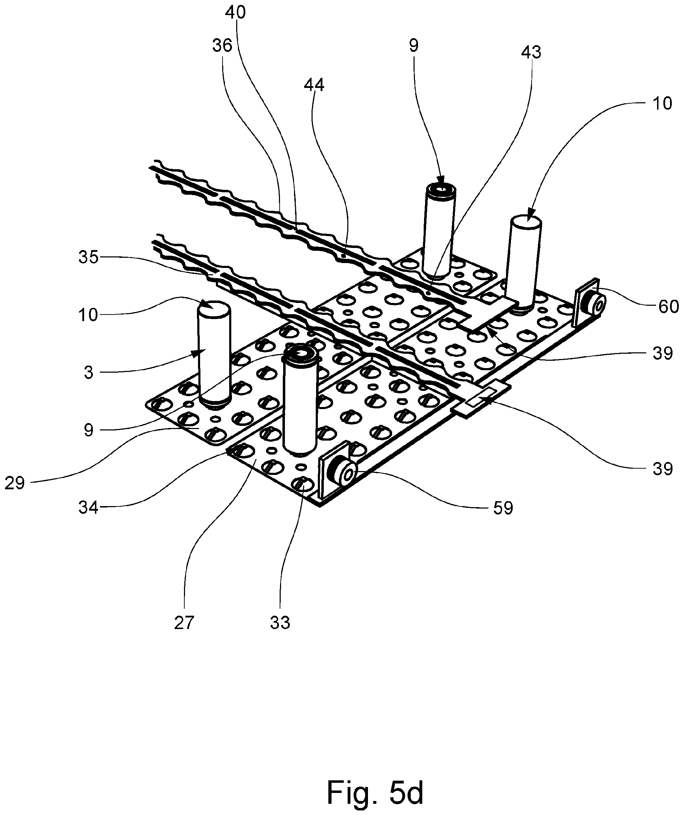

Das Zellmodul 1 weist in diesem Ausführungsbeispiel 24 Kontaktbleche auf, welche die 216 Zellen 3 zu zwölf elektrischen Zellgruppen zusammenfassen. Die elektrischen Zellgruppen werden durch Kontaktblechverbindungselemente 70 elektrisch verschaltet. Das wird im Folgenden beispielhaft anhand von einem ersten Kontaktblech 27, einem zweiten Kontaktblech 28, einem dritten Kontaktblech 29 und einem vierten Kontaktblech 30 dargestellt, siehe insbesondere Figuren 1b und 5a bis 5d. Ein Kontaktblechverbindungselement 70 ist im Wesentlichen ein Kupferstab mit einem rechteckigen Querschnittsprofil. Die Kontaktblechverbindungselemente 70 unterscheiden sich in ihren Längen. Ein Kontaktblechverbindungselement 70 und ein Kotaktblech sind hier durch Laserschweißung miteinander verbunden.

Zum einen ist das erste Kontaktblech 27 zwischen dem ersten Teilträger 14 und dem ersten Deckel 22 und zum anderen ist das zweite Kontaktblech 28 zwischen dem zweiten Teilträger 15 und dem zweiten Deckel 23 angeordnet. Eine erste elektrische Zellgruppe 31 ist gebildet, indem zum einen das erste Kontaktblech 27 die zweiten elektrischen Zellkontakte 10 von 18 Zellen 3 und zum anderen das zweite Kontaktblech 28 die ersten elektrischen Zellkontakte 9 dieser 18 Zellen 3 durch die Sacklochöffnungen 19 kontaktiert. Diese 18 Zellen 3 bestehen aus drei Reihen von jeweils sechs der Zellen 3. Weiter ist zum einen das dritte Kontaktblech 29 zwischen dem ersten Teilträger 14 und dem ersten Deckel 22 und zum anderen das vierte Kontaktblech 30 zwischen dem zweiten Teilträger 15 und dem zweiten Deckel 23 angeordnet. Eine zweite elektrische Zellgruppe 32 ist gebildet, indem zum einen das dritte Kontaktblech 29 die ersten elektrischen Zellkontakte 9 von weiteren 18 der Zellen 3 und zum anderen das vierte Kontaktblech 30 die zweiten Zellkontakte 10 von diesen weiteren 18 Zellen 3 durch die Sacklochöffnungen 19 kontaktiert.

Jeweils 18 der übrigen Zellen 3 bilden durch die übrigen Kontaktbleche zehn weitere Zellgruppen, die gleich den beiden beschriebenen Zellgruppen 31, 32 ausgebildet sind. Insgesamt weist das Zellmodul somit zwölf gleiche Zellgruppen auf. Die Kontaktierung jeder der Zellkontakte 9, 10 erfolgt durch eine Kontaktfeder 33 im jeweiligen Kontaktblech. Die Kontaktierung ist dabei lasergeschweißt für einen zuverlässigen elektrischen Kontakt. Weiter weist jedes der Kontaktbleche um die jeweilige Kontaktfeder 33 eine Kontaktausnehmung 34 auf, durch welche ein Temperiermedium von oder zu einer der Sacklochöffnungen 19 strömbar ist.

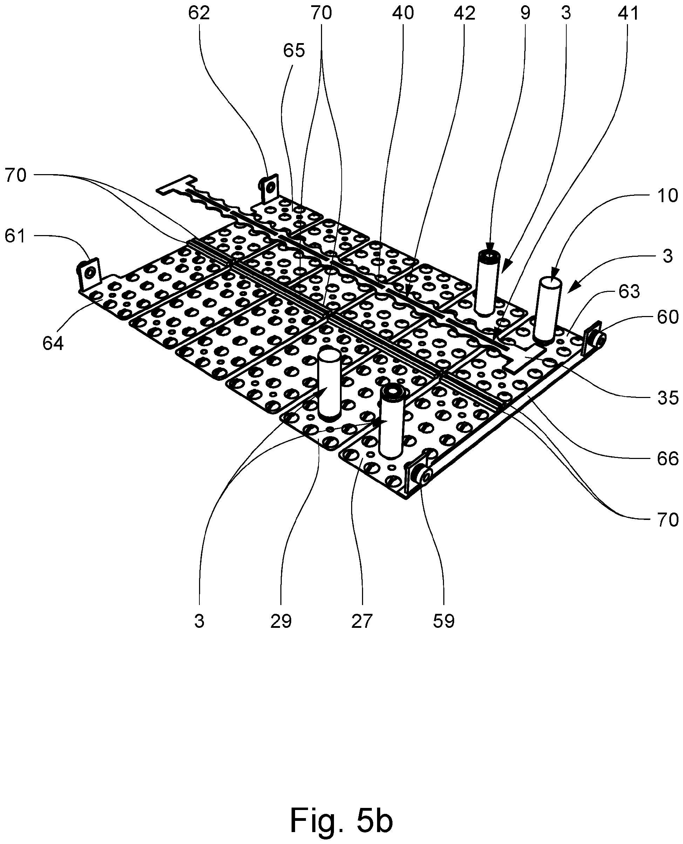

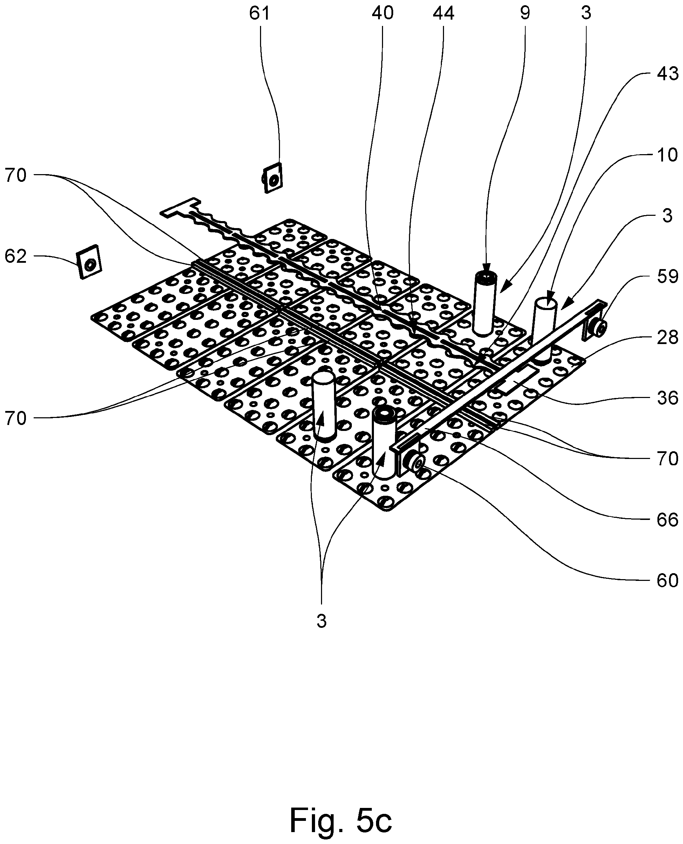

Die erste elektrische Zellgruppe 31 und die zweite elektrische Zellgruppe 32 sind durch Kontaktblechverbindungselemente 70 elektrisch in Reihe geschaltet, siehe insbesondere die Figuren 5b und 5c. Dazu verbindet eines der Kontaktblechverbindungselemente 70 das zweite Kontaktblech 28 und das vierte Kontaktblech 30 elektrisch. Das erste Kontaktblech 27 und das dritte Kontaktblech 29 sind durch die Kontaktblechverbindungselemente 70 nicht miteinander verbunden. Weitere der Kontaktblechverbindungselemente 70 verbinden vier weitere der Zellgruppen elektrisch in Reihe, sodass einschließlich der ersten elektrischen Zellgruppe 31 und der zweiten elektrischen Zellgruppe 32 sechs der elektrischen Zellgruppen in Reihe geschaltet sind und eine erste Reihenschaltung bilden. Die übrigen der Kontaktblechverbindungselemente 70 schalten die übrigen sechs Zellgruppen elektrisch in Reihe und bilden eine zweite Reihenschaltung. Die erste und zweite Reihenschaltung weisen jeweils 108 der 216 Zelle 3 auf.

Das Zellmodul 1 weist eine erste Messplatine 35, eine zweite Messplatine 36, eine Steuerungsplatine 37 mit einer Steuerung 38 und eine Verbindungsvorrichtung 39 auf. Die erste Messplatine 35 weist einen Temperatursensor 40 zur Messung einer Temperatur eines Temperiermediums und eine erste Kontaktvorrichtung 41 und eine zweite Kontaktvorrichtung 42 auf. Die erste Messplatine 35 ist auf den Kontaktblechverbindungselementen 70 angeordnet aber in Figur 5b angehoben und um 180° um ihre Längsachse gedreht dargestellt, sodass der Temperatursensor 40 und die Kontaktvorrichtungen 41, 42 sichtbar sind. Die zweite Messplatine 36 weist ebenfalls einen Temperatursensor 40 zur Messung einer Temperatur eines Temperiermediums und eine dritte Kontaktvorrichtung 43 und eine vierte Kontaktvorrichtung 44 auf. Die zweite Messplatine 36 ist auf den Kontaktblechverbindungselementen 70 angeordnet aber in Figur 5c angehoben und um 180° um ihre Längsachse gedreht dargestellt, sodass der Temperatursensor 40 und die Kontaktvorrichtungen 43, 44 sichtbar sind. Die Kontaktvorrichtungen 41 bis 44 sind zur Kontaktierung von den Kontaktblechen über die Kontaktblechverbindungselemente 70 ausgebildet.

In diesem Ausführungsbeispiel ist die erste Messplatine 35 nicht nur zwischen dem ersten Teilträger 14 und dem ersten Deckel 22, sondern genauer zwischen einerseits dem ersten Kontaktblech 27 und dem dritten Kontaktblech 29 und andererseits dem ersten Teilträger 14 angeordnet und kontaktiert die erste Kontaktvorrichtung 41 das erste Kontaktblech 27 und die zweite Kontaktvorrichtungen 42 das dritte Kontaktblech 29 auf einfache Weise über Kontaktblechverbindungselemente 70.

In diesem Ausführungsbeispiel ist auch die zweite Messplatine 36 nicht nur zwischen dem zweiten Teilträger 15 und dem zweiten Deckel 23, sondern genauer zwischen einerseits dem zweiten Kontaktblech 28 und dem vierten Kontaktblech 30 und andererseits dem zweiten Teilträger 15 angeordnet und kontaktiert die dritte Kontaktvorrichtung 43 das zweite Kontaktblech 28 und die vierte Kontaktvorrichtung 44 das vierte Kontaktblech 30 auf einfache Weise über Kontaktblechverbindungselemente 70. Da Kontaktblechverbindungselemente 70 in diesem Ausführungsbeispiel das zweite Kontaktblech 28 und das vierte Kontaktblech 30 miteinander elektrisch verbinden, könnte auch die dritte Kontaktvorrichtung 43 oder die vierte Kontaktvorrichtung 44 eingespart werden.

Die Steuerungsplatine 37 ist am Zellträger 2 angeordnet und sind einerseits die Steuerungsplatine 37 und die erste Messplatine 35 und andererseits die Steuerungsplatine 37 und die zweite Messplatine 36 elektrisch durch die Verbindungsvorrichtung 39 miteinander verbunden. Die Steuerung 38 ist zur Messung von Temperaturen mit den Temperatursensoren 40 ausgebildet. Weiter ist sie zur Messung einer Spannung über die erste elektrische Zellgruppe 31 mittels der ersten Kontaktvorrichtung 41 und der dritten Kontaktvorrichtung 43 und zur Messung einer Spannung über die zweite elektrische Zellgruppe 32 mittels der zweiten Kontaktvorrichtung 42 und der vierten Kontaktvorrichtung 44 ausgebildet.

In einer Stirnseite 45 des Zellträgers 2 ist eine Stirnseitenausnehmung 46 zur Aufnahme der Steuerungsplatine 37 und zur Durchströmung mit einem Temperiermedium ausgebildet. Die Steuerungsplatine 37 ist in der Stirnseitenausnehmung 46 angeordnet. Das Temperiermedium kann dabei in der Stirnseitenausnehmung stehen oder strömen.

Der Zellträger 2 weist an einer ersten Stirnseite 57 einen ersten elektrischen Anschluss 59 und einen zweiten elektrischen Anschluss 60 auf. Weiter weist der Zellträger 2 an einer zweiten Stirnseite 58, welche der ersten Stirnseite gegenüberliegt, einen dritten elektrischen Anschluss 61 und einen vierten elektrischen Anschluss 62 auf.

Der erste elektrische Anschluss 59 ist mit dem ersten Kontaktblech 27, der zweite elektrische Anschluss 60 ist mit einem fünften Kontaktblech 63, der dritte elektrische Anschluss 61 ist mit einem sechsten Kontaktblech 64 und der vierte elektrische Anschluss 62 ist mit einem siebten Kontaktblech 65 elektrisch verbunden.

Der erste elektrische Anschluss 59 und der dritte elektrische Anschluss 61 dienen der Entnahme von elektrischer Energie aus der ersten Reihenschaltung und zur Zuführung von elektrischer Energie in die erste Reihenschaltung. Dementsprechend dienen der zweite elektrische Anschluss 60 und der vierte elektrische Anschluss 62 der Entnahme von elektrischer Energie aus der zweiten Reihenschaltung und zur Zuführung von elektrischer Energie in die zweite Reihenschaltung.

In einem alternativen Ausführungsbeispiel sind das erste Kontaktblech 27 und das fünfte Kontaktblech 63 durch eine Stromschiene 66 elektrisch miteinander verbunden und fehlen der erste elektrische Anschluss 59 und der zweite elektrische Anschluss 60. In den Figuren sind beide Ausführungsbeispiele dargestellt. Im alternativen Ausführungsbeispiel sind die erste und zweite Reihenschaltung durch die Stromschiene 66 elektrisch in Reihe geschaltet. Es sind also alle zwölf elektrischen Zellgruppen elektrisch in Reihe geschaltet. Der dritte elektrische Anschluss 61 und der vierte elektrische Anschluss 62 dienen der Entnahme von elektrischer Energie aus den zwölf in Reihe geschalteten Zellgruppen und zur Zuführung von elektrischer Energie in die zwölf in Reihe geschaltete Zellgruppen.

In den Figuren ist eine Mehrzahl von identischen Elementen des Zellmoduls 1 und des Zellträgers 2 sichtbar. Der Übersichtlichkeit halber sind grundsätzlich nicht alle identischen Elemente gekennzeichnet. Das gilt zum Beispiel für die Kontaktbleche und die Zellen 3. In dem Ausführungsbeispiel sind die Stirnseite 45 und die erste Stirnseite 57 identisch.

### Bezugszeichen

1 Zellmodul
2 Zellträger
3 Zelle
4 Zellgehäuse
5 Zelllängsachse
6 Zellmantel
7 erste Zellkappe
8 zweite Zellkappe
9 erster elektrischer Zellkontakt
10 zweiter elektrischer Zellkontakt
11 Zellaufnahme
12 Aufnahmelängsachse
13 Trägerebene
14 erster Teilträger
15 zweiter Teilträger
16 Sackloch
17 Sacklochwandung
18 Sacklochboden
19 Sacklochöffnung
20 Sacklochausnehmung
21 Sacklochkanal
22 erster Deckel
23 zweiter Deckel
24 Einströmanschluss
25 Ausströmanschluss
26 Deckelausnehmung
27 erstes Kontaktblech
28 zweites Kontaktblech
29 dritten Kontaktblech
30 viertes Kontaktblech
31 erste elektrische Zellgruppe
32 zweite elektrische Zellgruppe
33 Kontaktfeder
34 Kontaktausnehmung
35 erste Messplatine
36 zweite Messplatine
37 Steuerungsplatine
38 Steuerung
39 Verbindungseinrichtung
40 Temperatursensor
41 erste Kontaktvorrichtung
42 zweite Kontaktvorrichtung
43 dritte Kontaktvorrichtung
44 vierte Kontaktvorrichtung
45 Stirnseite
46 Stirnseitenausnehmung
57 erste Stirnseite
58 zweite Stirnseite
59 erster elektrischer Anschluss
60 zweiter elektrischer Anschluss
61 dritter elektrischer Anschluss
62 vierter elektrischer Anschluss
63 fünftes Kontaktblech
64 sechstes Kontaktblech
65 siebtes Kontaktblech
66 Stromschiene
70 Kontaktblechverbindungselement

## Patentansprüche

1. Zellträger (2) für mindestens eine Zelle (3), wobei die mindestens eine Zelle (3) ein Zellgehäuse (4) aufweist, wobei der Zellträger (2) für die mindestens eine Zelle (3) eine Zellaufnahme (11) aufweist, wobei der Zellträger (2) aus einem Polyurethanschaum hergestellt ist und wobei der Polyurethanschaum ein Isocyanat und ein Polyol aufweist,
**dadurch gekennzeichnet,**
**dass** der Polyurethanschaum ein Gemisch mit dem Isocyanat und einem ersten Teilgemisch ist,
**dass** das erste Teilgemisch ein Gemisch mit dem Polyol und einem zweiten Teilgemisch ist und
**dass** das zweite Teilgemisch ein Ammoniumsulfat aufweist.

2. Zellträger (2) nach Anspruch 1, **dadurch gekennzeichnet, dass** der Polyurethanschaum ein Hochtemperatur-Polyurethanschaum ist.

3. Zellträger (2) nach Anspruch 1 oder 2, **dadurch gekennzeichnet, dass** das zweite Teilgemisch einen Gewichtsanteil zwischen 40 % und 70 %, vorzugsweise zwischen 45 % und 55 % am ersten Teilgemisch hat.

4. Zellträger (2) nach einem der Ansprüche 1 bis 3, **dadurch gekennzeichnet, dass** das zweite Teilgemisch Körner aufweist,
dass zwischen 7 % und 17 %, vorzugsweise zwischen 10 % und 14 % der Körner eine Größe größer als 125 µm aufweisen und/oder
dass zwischen 19 % und 59 %, vorzugsweise zwischen 29 % und 49 % der Körner eine Größe größer als 63 µm und kleiner oder gleich 125 µm aufweisen und/oder
dass zwischen 29 % und 61 %, vorzugsweise zwischen 37 % und 53 % der Körner eine Größe größer als 40 µm und kleiner oder gleich 63 µm aufweisen.

5. Zellträger (2) nach einem der Ansprüche 1 bis 4, **dadurch gekennzeichnet, dass** eine Dichte des Polyurethanschaums zwischen 0,6 g/ml und 0,9 g/ml, vorzugsweise zwischen 0,7 g/ml und 0,8 g/ml liegt.

6. Zellträger (2) nach einem der Ansprüche 1 bis 5, **dadurch gekennzeichnet, dass** der Polyurethanschaum eine Oberflächenschicht und eine Dichte aufweist und dass die Dichte in der Oberflächenschicht größer als im übrigen Polyurethanschaum ist.

7. Zellträger (2) nach Anspruch 6, **dadurch gekennzeichnet, dass** die Oberflächenschicht eine Dicke aufweist und die Dicke zwischen 0,3 mm und 1,5 mm, vorzugsweise zwischen 0,7 mm und 1,1 mm liegt.

8. Zellträger (2) nach einem der Ansprüche 1 bis 7, **dadurch gekennzeichnet, dass** der Polyurethanschaum Poren aufweist und eine Größe der Poren zwischen 10 µm und 200 µm, vorzugsweise zwischen 20 µm und 75 µm liegt.

9. Zellträger (2) nach einem der Ansprüche 1 bis 8, **dadurch gekennzeichnet, dass** das Ammoniumsulfat einen Gewichtsanteil zwischen 64 % und 70 % am zweiten Teilgemisch hat.

10. Zellträger (2) nach einem der Ansprüche 1 bis 9, **dadurch gekennzeichnet, dass** das zweite Teilgemisch einen Glimmer aufweist und dass der Glimmer einen Gewichtsanteil von mehr als 2 % am zweiten Teilgemisch hat.

11. Zellträger (2) nach einem der Ansprüche 1 bis 10, **dadurch gekennzeichnet, dass** das zweite Teilgemisch ein Ammoniumphosphat, insbesondere ein Ammoniumdihydrogenorthophosphat aufweist und dass vorzugsweise das zweite Teilgemisch aus dem Ammoniumsulfat, dem Glimmer und dem Ammoniumphosphat besteht.

12. Zellträger (2) nach einem der Ansprüche 1 bis 11,
wobei das Zellgehäuse (4) zylinderförmig ist und eine Zelllängsachse (5), einen Zellmantel (6), eine ersten Zellkappe (7) und eine zweiten Zellkappe (8) aufweist,
wobei die erste Zellkappe (7) ein erstes Ende des Zellmantels (6) abschließt und in der ersten Zellkappe (7) ein erster elektrischer Zellkontakt (9) ist und die zweite Zellkappe (8) ein zweites Ende des Zellmantels (6) abschließt und in der zweiten Zellkappe (8) ein zweiter elektrischer Zellkontakt (10) ist, wobei die Zellaufnahme (11) eine Aufnahmelängsachse (12) für eine Aufnahme der Zelle (3) aufweist und
wobei bei in der Zellaufnahme (11) angeordneter Zelle (3) die Aufnahmelängsachse (12) und die Zelllängsachse (5) zusammenfallen,
**dadurch gekennzeichnet,**
**dass** der Zellträger (2) in einer Trägerebene (13) senkrecht zur Aufnahmelängsachse (12) in einen ersten Teilträger (14) und einen zweiten Teilträger (15) aufgeteilt ist und der erste Teilträger (14) und der zweite Teilträger (15) Komponenten des Zellträgers (2) sind,
**dass** der erste Teilträger (14) und der zweite Teilträger (15) auseinanderführbar und zusammenführbar sind,
**dass** die Zellaufnahme (11) durch ein Sackloch (16) mit einer Sacklochwandung (17) und einem Sacklochboden (18) zum einen im ersten Teilträger (14) und zum anderen im zweiten Teilträger (15) zusammen gebildet ist,
**dass** jeder der Sacklochböden (18) eine Sacklochöffnung (19) und jede der Sacklochwandungen (17) mindestens eine Sacklochausnehmung (20) aufweist,
**dass** die Zelle (3) in das Sackloch (16) des ersten Teilträgers (14) und in das Sackloch (16) des zweiten Teilträgers (15) beschädigungsfrei hineinschiebbar und herausziehbar ist,
**dass** bei zusammengeführtem ersten Teilträger (14) und zweiten Teilträger (15) die Sacklochausnehmung (20) im ersten Teilträger (14) und die Sacklochausnehmung (20) im zweiten Teilträger (15) zusammen einen Sacklochkanal (21) bilden und der Sacklochkanal (21) die Sacklochöffnung (19) des ersten Teilträgers (14) und die Sacklochöffnung (19) des zweiten Teilträgers (15) miteinander verbindet und
**dass** bei in das Sackloch (16) des ersten Teilträgers (14) und in das Sackloch (16) des zweiten Teilträgers (15) hineingeschobener Zelle (3) und bei zusammengeführtem ersten Teilträger (14) und zweiten Teilträger (15) ein Temperiermedium durch die Sacklochöffnung (19) des ersten Teilträgers (14) über den Sacklochkanal (21) zur Sacklochöffnung (19) des zweiten Teilträgers (15) strömbar ist und das Temperiermedium dabei in unmittelbarem Kontakt mit der ersten Zellkappe (7), dem Zellmantel (6) und der zweiten Zellkappe (8) ist.

13. Zellträger (2) nach Anspruch 12, **dadurch gekennzeichnet, dass** die Zellaufnahme (11) die Zelle (3) durch Formschluss anordnet, vorzugsweise durch Kraftschluss.

14. Zellträger (2) nach Anspruch 12 oder 13, **dadurch gekennzeichnet, dass** der erste Teilträger (14) und der zweite Teilträger (15) symmetrisch zueinander sind.

15. Zellträger (2) nach einem der Ansprüche 12 bis 14, **dadurch gekennzeichnet,**
**dass** der Zellträger (2) einen ersten Deckel (22) passend auf den ersten Teilträger (14) und einen zweiten Deckel (23) passend auf den zweiten Teilträger (15) aufweist und der erste Deckel (22) und der zweite Deckel (23) Komponenten des Zellträgers (2) sind,
**dass** zum einen der erste Deckel (22) und der erste Teilträger (14) und zum anderen der zweite Deckel (23) und der zweite Teilträger (15) auseinanderführbar und zusammenführbar sind,
**dass** der erste Teilträger (14) einen Einströmanschluss (24) und der zweite Teilträger (15) einen Ausströmanschluss (25) für ein Temperiermedium aufweist und
**dass** der erste Deckel (22) eine Deckelausnehmung (26) zum Führen des Temperiermediums vom Einströmanschluss (24) zur Sacklochöffnung (19) des Sacklochs (16) im ersten Teilträger (14) und der zweite Deckel (23) weist eine Deckelausnehmung (26) zum Führen des Temperiermediums von der Sacklochöffnung (19) des Sacklochs (16) im zweiten Teilträger (15) zum Ausströmanschluss (25) aufweist.

16. Zellträger (2) nach Anspruch 15, **dadurch gekennzeichnet, dass** der erste Deckel (22) und der zweite Deckel (23) symmetrisch zueinander sind.

17. Zellträger (2) nach einem der Ansprüche 1 bis 16, **dadurch gekennzeichnet, dass** zumindest eine der Komponenten einstückig ist.

18. Zellträger (2) nach einem der Ansprüche 1 bis 17, **dadurch gekennzeichnet, dass** der Zellträger (2) mindestens zwei Zellaufnahmen (11) aufweist, dass die Zellaufnahmen (11) durch den Polyurethanschaum mit einem minimalen Abstand beabstandet sind und dass der Abstand zwischen 4 mm und 6 mm, vorzugsweise zwischen 4,2 mm und 5 mm liegt.
